# EUROPEAN PATENT APPLICATION

(11) **EP 4 851 234 A1**
(43) Date of publication of application: **09.12.2026**
(21) Application number: 26180440.5
(22) Date of filing: 22.05.2026
(51) Int. Cl.: C08J 9/00, C08J 9/12, C08J 9/18, C08J 9/232, C08K 3/016, C08K 3/32, C08K 5/00, C08K 5/49, C08K 5/52

(54) **POLYPROPYLENE-BASED RESIN FOAMED PARTICLES, MOLDED ARTICLE OF POLYPROPYLENE-BASED RESIN FOAMED PARTICLES, AND METHOD OF MANUFACTURING POLYPROPYLENE-BASED RESIN FOAMED PARTICLES**

(30) Priority: 06.06.2025 JP 2025094677
(71) Applicant: JSP Corporation, Tokyo 100-0005 (JP)
(72) Inventor: ITO, Yosuke, Kanuma-shi, Tochigi, 3220014 (JP)
(74) Representative: Hasegawa, Kan

(57) **Abstract**

There are provided polypropylene-based resin foamed particles having high flame resistance and further having excellent moldability even when a halogen-free flame retardant is used. The polypropylene-based resin foamed particles include a piperazine phosphate compound (a) and a melamine phosphate compound (b). The piperazine phosphate compound (a) is blended in an amount of 3 mass% or more and 20 mass% or less, the melamine phosphate compound (b) is blended in an amount of 1 mass% or more and 15 mass% or less, and the piperazine phosphate compound (a) and the melamine phosphate compound (b) are blended in such amounts that a mass ratio of (a): (b) is 85:15 to 30:70.

## Description

### CROSS-REFERENCE TO RELATED APPLICATIONS

This application claims the benefits of Japanese Patent Application No.2025-094677 filed on June 6, 2025 in the Japanese Patent Office, the disclosure of which is herein incorporated in its entirety by reference.

### BACKGROUND OF THE INVENTION

The present disclosure relates to polypropylene-based resin foamed particles, a molded article of polypropylene-based resin foamed particles, and a method of manufacturing polypropylene-based resin foamed particles.

Molded articles of polypropylene-based resin foamed particles are used as shock absorbing materials, heat insulating materials and various packaging materials. Specifically, they are widely used as packaging/cushioning materials of electric parts and electronic parts, packaging/cushioning materials of automobile parts, and various packaging materials for other products such as precision parts and foods.

Molded articles of polypropylene-based resin foamed particles can be also used as parts for electric vehicles. Molded articles of polypropylene-based resin foamed particles for use in such an application may require flame resistance.

Halogenated flame retardants have heretofore been widely used in order to make molded articles of polypropylene-based resin foamed particles conform to a high-level flame resistance standard. However, it is preferred to use more environmentally friendly or more human body friendly materials. Under the circumstances, use of non-halogenated flame retardants has been considered. For instance, it has been proposed to use a cyclic phosphonate (e.g., Aflammit (registered trademark)) in WO 2023/090311 and WO 2023/181879).

### SUMMARY OF THE INVENTION

However, conventional polypropylene-based resin foamed particles as described in WO 2023/090311 and WO 2023/181879 had room for improvement in terms of moldability when moldings or other molded products were manufactured. Particularly when manufacturing a molded article having a complicated shape such as an article having both a thick portion and a thin portion or an article having a narrow portion, there were lots of room for improvement in terms of moldability.

An object of the present disclosure is to solve the problem as described above. Specifically, the present disclosure provides polypropylene-based resin foamed particles having high flame resistance and further having excellent moldability even when a halogen-free flame retardant is used.

The present disclosure provides
polypropylene-based resin foamed particles including:
a piperazine phosphate compound (a); and a melamine phosphate compound (b), wherein:
the piperazine phosphate compound (a) is blended in an amount of 3 mass% or more and 20 mass% or less,
the melamine phosphate compound (b) is blended in an amount of 1 mass% or more and 15 mass% or less, and
the piperazine phosphate compound (a) and the melamine phosphate compound (b) are blended in such amounts that a mass ratio of (a): (b) is 85:15 to 30:70.

The present disclosure can provide polypropylene-based resin foamed particles having high flame resistance and further having excellent moldability even when a halogen-free flame retardant is used.

### DESCRIPTION OF EMBODIMENTS

The disclosure will be now described herein with reference to illustrative embodiments. Those skilled in the art will recognize that many alternative embodiments can be accomplished using the teachings of the present disclosure and that the disclosure is not limited to the embodiments illustrated for explanatory purposed.

### <<Foamed Particles and Molded Article>>

The foamed particles of the disclosure are polypropylene-based resin foamed particles including: a piperazine phosphate compound (a); and a melamine phosphate compound (b), wherein: the piperazine phosphate compound (a) is blended in an amount of 3 mass% or more and 20 mass% or less, the melamine phosphate compound (b) is blended in an amount of 1 mass% or more and 15 mass% or less, and the piperazine phosphate compound (a) and the melamine phosphate compound (b) are blended in such amounts that a mass ratio of (a): (b) is 85:15 to 30:70.

The molded article of the disclosure is a molded article of polypropylene-based resin foamed particles, the molded article including: a piperazine phosphate compound (a); and a melamine phosphate compound (b), wherein: the piperazine phosphate compound (a) is blended in an amount of 3 mass% or more and 20 mass% or less, the melamine phosphate compound (b) is blended in an amount of 1 mass% or more and 15 mass% or less, and the piperazine phosphate compound (a) and the melamine phosphate compound (b) are blended in such amounts that a mass ratio of (a):(b) is 85:15 to 30:70.

The molded article of the disclosure can be obtained by molding the foamed particles of the disclosure in a mold. Such molding is hereinafter sometimes referred to simply as "in-mold molding."

The expression used hereinafter simply as "the disclosure" refers to both the foamed particles of the disclosure and the molded article of the disclosure. The following description may include preferred numerical ranges of the disclosure. In such cases, the expression "A to B" representing a numerical range is synonymous with the expression "A or more and B or less" and represents a numerical range in which A and B are included as its end points.

The foamed particles of the disclosure have a high closed cell content although a flame retardant containing no halogen (hereinafter referred to also as a "halogen-free flame retardant") is blended thereinto in an amount necessary for exhibiting a high level of flame resistance. In contrast, conventional polypropylene foamed particles containing a cyclic phosphonate (for example, Aflammit (registered trademark)) as a halogen-free flame retardant instead of the piperazine phosphate compound (a) and the melamine phosphate compound (b) were more likely to have a low closed cell content.

Polypropylene foamed particles having a low closed cell content are inferior in moldability (in particular secondary foaming properties) when they are molded in a mold to obtain a molded article. Further, when polypropylene-based resin foamed particles have a low closed cell content, a molded article obtained using the resin foamed particles is also more likely to have a low closed cell content, thus leading to reduced rigidity.

When manufacturing a molded article having a complicated shape such as an article having both a thick portion and a thin portion or an article having a narrow portion, so-called internal pressure molding which includes: pressurizing polypropylene-based resin foamed particles to increase the pressure in bubbles, and then performing in-mold molding is very often performed. When the foamed particles have a low closed cell content in this process, the pressure in the bubbles is promptly reduced and therefore it is difficult to suitably apply internal pressure to the foamed particles. That is, conventional polypropylene-based resin foamed particles using a halogen-free flame retardant were more likely to have a reduced closed cell content and therefore it was difficult to perform internal pressure molding and the polypropylene-based resin foamed particles were significantly inferior in moldability (in particular secondary foaming properties) when a molded article having a complicated shape was manufactured.

The foamed particles of the disclosure have a high closed cell content and are therefore excellent in moldability (in particular secondary foaming properties) when they are molded in a mold to obtain a molded article. Particularly when manufacturing a molded article having a complicated shape such as an article having both a thick portion and a thin portion or an article having a narrow portion, internal pressure molding can be efficiently performed.

Further, a molded article obtained using the foamed particles of the disclosure will also have a higher closed cell content, thus leading to increased rigidity of the molded article.

The molded article of the disclosure has high flame resistance. Specifically, the molded article of the disclosure can achieve V-2 of the UL94 standard and may also achieve V-1 or V-0. According to a more preferred embodiment, the molded article of the disclosure can achieve V-0 of the UL94 standard consistently.

### [Components]

### <Polypropylene-based Resin>

The disclosure includes a polypropylene-based resin as a base material.

The polypropylene-based resin included in the disclosure will be described.

In the disclosure, the polypropylene-based resin refers to a homopolymer of propylene monomer, and a propylene copolymer containing at least 50 mass% of a structural unit derived from propylene.

Preferred examples of the propylene copolymer include copolymers of propylene, ethylene, and/or an α-olefin containing 4 to 10 carbon atoms, as exemplified by an ethylene-propylene copolymer, a butene-propylene copolymer, an ethylene-propylene-butene copolymer, an α-olefin containing 4 to 10 carbon atoms-propylene copolymer, and an ethylene-propylene-α-olefin containing 4 to 10 carbon atoms copolymer. These copolymers may be, for example, random copolymers, block copolymers or the like, but are preferably random copolymers.

The disclosure may be composed of one, or two or more types of polypropylene-based resin.

In the disclosure, the polypropylene-based resin is preferably blended in an amount of 60 mass% or more, more preferably 70 mass% or more, and even more preferably 75 mass% or more with respect to 100 mass% of the foamed particles.

### <Piperazine Phosphate Compound (a)>

The piperazine phosphate compound (a) included in the disclosure will be described.

The disclosure includes the polypropylene-based resin as a base material, and also includes both a piperazine phosphate compound (a) and a melamine phosphate compound (b) to be described later as flame retardants at a specified ratio. Therefore, the molded article of the disclosure has high flame resistance. Specifically, the molded article of the disclosure can achieve V-2 of the UL94 standard and may also achieve V-1 or V-0. Further, the foamed particles are less likely to have a reduced closed cell content and are excellent in moldability.

The piperazine phosphate compound (a) is not particularly limited as long as it is classified as a piperazine phosphate compound.

The piperazine phosphate compound (a) is preferably at least one selected from the group consisting of piperazine orthophosphate, piperazine pyrophosphate, and piperazine polyphosphate.

In the disclosure, the piperazine phosphate compound (a) is blended in an amount of 3 mass% or more and 20 mass% or less, preferably 5 mass% or more and 18 mass% or less, more preferably 8 mass% or more and 15 mass% or less, and even more preferably 10 mass% or more and 12 mass% or less.

When the piperazine phosphate compound (a) is blended into the foamed particles in too small an amount, a molded article having excellent flame resistance is less likely to be obtained. On the other hand, when the piperazine phosphate compound (a) is blended into the foamed particles in too large an amount, the foamed particles tend to shrink excessively due to heating during molding and, as a result, a good molded article having excellent appearance is less likely to be obtained.

The amount of the piperazine phosphate compound (a) blended in the molded article of the disclosure is within the above-defined range and the molded article has therefore excellent appearance.

### <Melamine Phosphate Compound (b)>

The melamine phosphate compound (b) included in the disclosure will be described.

The disclosure includes the polypropylene-based resin as a base material, and also includes both a melamine phosphate compound (b) and the above-mentioned piperazine phosphate compound (a) at a specified ratio. Therefore, the molded article of the disclosure has high flame resistance. Specifically, the molded article of the disclosure can achieve V-2 of the UL94 standard and may also achieve V-1 or V-0. Further, the foamed particles are less likely to have a reduced closed cell content and are excellent in moldability.

The melamine phosphate compound (b) is not particularly limited as long as it is classified as a melamine phosphate compound.

The melamine compound constituting the melamine phosphate compound (b) may be a melamine condensation product and may be specifically melam, melem, or melon. The melamine compound is preferably melamine. Specifically, the melamine phosphate compound (b) is preferably at least one selected from the group consisting of melamine orthophosphate, melamine pyrophosphate, and melamine polyphosphate.

In the disclosure, the melamine phosphate compound (b) is blended in an amount of 1 mass% or more and 15 mass% or less, preferably 2 mass% or more and 13 mass% or less, more preferably 3 mass% or more and 12 mass% or less, and even more preferably 5 mass% or more and 10 mass% or less.

When the melamine phosphate compound (b) is blended into the foamed particles in too small an amount, a molded article having excellent flame resistance is less likely to be obtained. On the other hand, when the melamine phosphate compound (b) is blended into the foamed particles in too large an amount, the foamed particles tend to shrink excessively due to heating during molding and, as a result, a good molded article having excellent appearance is less likely to be obtained.

The amount of the melamine phosphate compound (b) blended in the molded article of the disclosure is within the above-defined range and the molded article has therefore excellent appearance.

### <Total of Piperazine Phosphate Compound (a) and Melamine Phosphate Compound (b)>

In the disclosure, the piperazine phosphate compound (a) and the melamine phosphate compound (b) are preferably blended in a total amount of 5 mass% or more and less than 30 mass%, more preferably 8 mass% or more and 28 mass% or less, even more preferably 10 mass% or more and 25 mass% or less, particularly preferably 12 mass% or more and 22 mass% or less, and most preferably 15 mass% or more and 20 mass% or less.

When the piperazine phosphate compound (a) and the melamine phosphate compound (b) are blended in a total amount within the above-defined range, the foamed particles have better foaming properties and in-mold moldability.

### <Blending Ratio between Piperazine Phosphate Compound (a) and Melamine Phosphate Compound (b)>

In the disclosure, the piperazine phosphate compound (a) and the melamine phosphate compound (b) are blended in such amounts that the mass ratio of (a): (b) is 85:15 to 30:70, preferably 80:20 to 33:67, more preferably 75:25 to 35:65, even more preferably 70:30 to 40:60, still more preferably 65:35 to 45:55, particularly preferably 60:40 to 50:50, and most preferably 59:41 to 55:45. The mass ratio expressed by (a): (b) refers to a value shown with respect to the sum of (a) and (b) which is assumed to be 100 mass%.

When the piperazine phosphate compound (a) and the melamine phosphate compound (b) are blended in such amounts that the mass ratio is within the above-defined range, the molded article of the disclosure has higher flame resistance.

When the amounts of the piperazine phosphate compound (a) and the melamine phosphate compound (b) blended into a resin composition to be described later are known, the amount values are taken as the amounts of the piperazine phosphate compound (a) and the melamine phosphate compound (b) blended in the disclosure. Even when the amounts of the piperazine phosphate compound (a) and the melamine phosphate compound (b) blended into the resin composition are not known, the blending amounts of the piperazine phosphate compound (a) and the melamine phosphate compound (b) can be obtained by quantifying the piperazine phosphate compound (a) and the melamine phosphate compound (b) included in the foamed particles using chemical analysis.

Specifically, qualitative and quantitative analysis can be performed by the following method:
First, a mixed solution obtained by adding a predetermined amount of foamed particles to concentrated nitric acid is heated to 230°C to dissolve not only the foamed particles but also the piperazine phosphate compound (a) and the melamine phosphate compound (b).

Then, ultrapure water is used to adjust the volume to a predetermined value.

Then, the volume-adjusted solution is subjected to ultrasonic extraction to separate it into a soluble portion and an insoluble portion. In this process, the piperazine phosphate compound (a) and the melamine phosphate compound (b) are separated into the soluble portion side and insoluble portion side, respectively.

Then, the piperazine phosphate compound (a) can be qualitatively analyzed by subjecting a test solution obtained by filtering the separated solution to IR analysis. Then, the content of the piperazine phosphate compound (a) can be calculated from a phosphate ion value quantified by subjecting the test solution obtained by filtering to ion chromatography measurement.

The melamine phosphate compound (b) can be qualitatively analyzed by subjecting the insoluble portion after separation to IR analysis. The content of the melamine phosphate compound (b) can be calculated by quantifying the phosphorus (P) component through XRF analysis of the insoluble portion.

The reason why the molded article of the disclosure exhibits a high level of flame resistance is not clear. However, the inventor presumes that the piperazine phosphate compound (a) and the melamine phosphate compound (b) interact with each other to form a strong carbonized layer at surfaces of the molded article, thus blocking a combustion reaction.

### <Metal Hypophosphite (c)>

The disclosure preferably includes a metal hypophosphite (c).

The metal hypophosphite (c) is not particularly limited. The metal hypophosphite (c) is preferably at least one selected from the group consisting of aluminum hypophosphite, sodium hypophosphite, magnesium hypophosphite, calcium hypophosphite, and zinc hypophosphite, more preferably aluminum hypophosphite and/or calcium hypophosphite, and even more preferably aluminum hypophosphite.

In the disclosure, the metal hypophosphite (c) is preferably blended in an amount of 0.2 mass% or more and less than 3 mass%, more preferably 0.5 mass% or more and 2.5 mass% or less, and even more preferably 0.8 mass% or more and 2.0 mass% or less.

When the disclosure includes the metal hypophosphite (c) in the blending amount within the above-defined range, the molded article of the disclosure has higher flame resistance.

The inventor presumes as follows: When the molded article of the disclosure is heated, the metal hypophosphite (c) is thermally decomposed to cause dehydration and carbonization, thereby suppressing generation of flammable gas caused by thermal decomposition of the molded article. The inventor further presumes that the presence of the metal hypophosphite (c) promotes formation of a carbonized layer at surfaces of the molded article.

When the amount of the metal hypophosphite (c) blended into the resin composition is known, the amount value is taken as the amount of the metal hypophosphite (c) blended in the disclosure. Even when the amount of the metal hypophosphite (c) blended into the resin composition is not known, the amount of the blended metal hypophosphite (c) can be obtained by quantifying the metal hypophosphite (c) included in the foamed particles using chemical analysis.

Specifically, qualitative and quantitative analysis can be performed by the following method:
First, a mixed solution obtained by adding a predetermined amount of foamed particles to concentrated nitric acid is heated to 230°C to dissolve not only the foamed particles but also a phosphorus component and a metallic element component derived from a metal hypophosphite (for example, aluminum when aluminum hypophosphite is used as the metal hypophosphite).

Then, ultrapure water is used to adjust the volume to a predetermined value.

Then, the volume-adjusted solution is subjected to ICP emission spectrometry to quantify the contents of phosphorus and the metallic element derived from the metal hypophosphite.

Then, the mass of the metal hypophosphite contained in the solution is calculated based on the resulting contents of the phosphorus and the metallic element, and is divided by the mass of the foamed particles used for the measurement and the resulting value is expressed in percentage, whereby the amount of the metal hypophosphite blended into the foamed particles can be calculated.

### <Total of Piperazine Phosphate Compound (a), Melamine Phosphate Compound (b) and Metal Hypophosphite (c)>

In the disclosure, the piperazine phosphate compound (a), the melamine phosphate compound (b), and the metal hypophosphite (c) are preferably blended in a total amount of 10 mass% or more and 35 mass% or less, more preferably 12 mass% or more and 30 mass% or less, even more preferably 15 mass% or more and 28 mass% or less, and particularly preferably 18 mass% or more and 25 mass% or less.

When the piperazine phosphate compound (a), the melamine phosphate compound (b), and the metal hypophosphite (c) are blended in the total amount within the above-defined range, the foamed particles have better foaming properties and in-mold moldability.

### <Blending Ratio between Piperazine Phosphate Compound (a) and Metal Hypophosphite (c)>

The ratio of the amount of the blended piperazine phosphate compound (a) to that of the blended metal hypophosphite (c) in the disclosure (piperazine phosphate compound (a) / metal hypophosphite (c)) is preferably 3.0 to 20, and more preferably 5.0 to 14. When the ratio of the amount of the blended piperazine phosphate compound (a) to that of the blended metal hypophosphite (c) is within the above-defined range, the molded article of the disclosure has higher flame resistance. Moldability will be better when moldings or other molded products are manufactured using the foamed particles of the disclosure.

### <Other Components>

As described above, the disclosure includes the polypropylene-based resin as a base material, also includes the piperazine phosphate compound (a) and the melamine phosphate compound (b) at a specified ratio, and may further include the metal hypophosphite (c). Then, the disclosure may further include any other polymer component and an additive within ranges within which the intended purpose of the disclosure can be achieved.

Examples of such other polymer component include a synthetic resin other than the polypropylene-based resin, a synthetic rubber, and an elastomer.

Specific examples of the synthetic resin include thermoplastic resins, for example, ethylene resins such as high-density polyethylene, low-density polyethylene, linear low-density polyethylene, ethylene-vinyl acetate copolymer, ethylene-acrylic acid copolymer, and ethylene-methacrylic acid copolymer; styrene resins such as polystyrene and styrene-maleic anhydride copolymer; polyamide resins; and polyester resins.

Examples of the synthetic rubber include ethylene-propylene rubber, ethylene-1-butene rubber, propylene-1-butene rubber and styrene-butadiene rubber, and hydrogenated products thereof, isoprene rubber, neoprene rubber, and nitrile rubber.

Examples of the elastomer include styrene-butadiene block copolymer elastomer and hydrogenated products thereof, olefinic thermoplastic elastomer, and urethane thermoplastic elastomer.

Such other polymer component is preferably blended in an amount of 30 parts by mass or less, more preferably 20 parts by mass or less, even more preferably 10 parts by mass or less, still more preferably 5 parts by mass or less, and particularly preferably 3 parts by mass or less with respect to 100 parts by mass of the polypropylene-based resin. Most preferably, such other polymer component is not included, that is, the foamed particles include only the polypropylene-based resin as the polymer component.

An example of the additive which may be included in the disclosure is a cell nucleating agent. Examples of the cell nucleating agent include inorganic powdery substances such as zinc borate, talc, calcium carbonate, borax, and aluminum hydroxide. The average bubble diameter of the foamed particles obtained is easily adjusted within a desired range by blending the cell nucleating agent.

The cell nucleating agent is preferably blended in an amount of 0.005 to 1 part by mass with respect to 100 parts by mass of the polypropylene-based resin.

Examples of the additive which may be contained in the disclosure include an antioxidant, a uv absorber, an antistatic agent, a metal deactivator, a crystal nucleating agent, a flame retardant, a flame retardant aid, a plasticizer, a light stabilizer, an antimicrobial agent and a colorant. The additives are preferably blended in an amount of 20 parts by mass or less, more preferably 10 parts by mass or less, and even more preferably 5 parts by mass or less with respect to 100 parts by mass of the polypropylene-based resin.

However, preferably, the disclosure is substantially free from a flame retardant containing a halogen in its structure. In other words, the disclosure may include a flame retardant containing a halogen in its structure in an amount of 0.3 mass% or less. Such flame retardant is preferably included in an amount of 0.1 mass% or less, more preferably 0.01 mass% or less, and even more preferably 0.005 mass% or less. Particularly preferably, such flame retardant is not included therein.

The disclosure may include a halogen in an amount of 0.2 mass% or less, 0.05 mass% or less, 0.008 mass% or less, or 0.003 mass% or less.

The halogen content in the disclosure can be quantified by XRF elemental analysis.

### [Physical Properties, Structure and the like]

### <Closed Cell Content of Foamed Particles>

The foamed particles of the disclosure preferably have a closed cell content of at least 80%, more preferably at least 85%, even more preferably at least 88%, and particularly preferably at least 90%.

The foamed particles of the disclosure having a closed cell content within the above-defined range are more excellent in moldability (in particular secondary foaming properties) when they are molded in a mold to obtain a molded article. Particularly when manufacturing a molded article having a complicated shape such as an article having both a thick portion and a thin portion or an article having a narrow portion, internal pressure molding can be efficiently performed.

Further, a molded article obtained using the foamed particles of the disclosure also has a higher closed cell content, thus leading to increased rigidity of the molded article. Conventionally, in foamed particles including an additive such as a flame retardant in a large amount, there were cases in which heating during in-mold molding destroyed the closed cell structure to considerably reduce the closed cell content of a molded article as compared to that of the foamed particles. According to the foamed particles of the disclosure, the closed cell content is less likely to be reduced even after the in-mold molding, and a molded article having excellent rigidity can be easily formed.

A method of measuring the closed cell content of the foamed particles of the disclosure will be described in Examples to be referred to later.

### <Bulk Density of Foamed Particles>

The foamed particles of the disclosure preferably have a bulk density of 80 kg/m³ or more and 500 kg/m³ or less, more preferably 100 kg/m³ or more and 400 kg/m³ or less, and even more preferably 110 kg/m³ or more and 300 kg/m³ or less.

When the bulk density of the foamed particles of the disclosure is within the above-defined range, the resulting molded article of the disclosure has higher rigidity and higher flame resistance.

The bulk density of the foamed particles of the disclosure is expressed by a value obtained by measurement using a method described in Examples to be referred to later.

### <External Diameter of Foamed Particles>

The foamed particles of the disclosure preferably have an average external diameter of 1 to 5 mm, and more preferably 2 to 4 mm. The foamed particles of the disclosure having the average external diameter as above are excellent in packing into a mold during molding.

The average external diameter of the foamed particles is determined as follows:
First, a foamed particle is cut at a position at which its cut surface has approximately the largest area.

Next, a photo of the cut surface of the foamed particle is taken to determine the cross-sectional area of the foamed particle, and the diameter of a virtual perfect circle having the same area as the above area is calculated and taken as the external diameter of the foamed particle.

Then, this operation is repeated on randomly selected 50 foamed particles, and a simple average value of the measured values obtained is taken as the average external diameter of the foamed particles.

### <Shape of Foamed Particles>

The shape of the foamed particles of the disclosure is not particularly limited. The foamed particles may have, for example, a cylindrical, rugby-ball-like, spherical, or tubular shape.

### <High Temperature Peak of Foamed Particles>

The foamed particles of the disclosure preferably have such a crystal structure that a first melting peak and one or more second melting peaks located on a higher temperature side than the first melting peak appear on a DSC curve. When having such a crystal structure, the foamed particles of the disclosure can achieve better in-mold moldability. The first melting peak is a melting peak due to melting of a component intrinsic to a material constituting the foamed particles of the disclosure, and may also be called a melting peak appearing due to melting of crystals usually included in the material constituting the foamed particles of the disclosure. The first melting peak is also called "intrinsic peak." The second melting peak appearing on the higher temperature side than the first melting peak is also called "high temperature peak." The high temperature peak is presumed to appear due to melting of secondary crystals formed in a material component during the manufacturing process of the foamed particles of the disclosure. In other words, when the high temperature peak appears on the DSC curve, the secondary crystals are presumed to be formed in the material component.

### <Structure of Foamed Particles>

Each of the foamed particles of the disclosure may be of a type including one or more cover layers located on at least a part of its surface. In this case, the foamed particles of the disclosure having such cover layers have a multi-layer structure as a whole. In this case, each foamed particle of the disclosure is also called a foamed core layer. That is, when a foamed particle has a multi-layer structure having a cover layer, the amount of the blended flame retardant refers to the blending amount in the foamed core layer.

The cover layer may be composed of, for example, polyolefin resin.

Crystalline polyolefin resin having a lower melting point than that of a material constituting the foamed particle (foamed core layer) of the disclosure, and amorphous polyolefin resin having a lower softening point than the melting point of the material constituting the foamed particle (foamed core layer) of the disclosure may be suitably used for the polyolefin resin. In this case, the foamed particles are easily fused together at comparatively low molding steam pressure.

The polyolefin resin is preferably polypropylene-based resin and/or polyethylene resin, and more preferably polypropylene-based resin.

The polypropylene-based resin that may be preferably used is a propylene copolymer which is a copolymer of propylene, ethylene, and/or an α-olefin having 4 or more carbon atoms.

The propylene copolymer preferably contains at least 60 mol%, more preferably 80 mol%, and even more preferably 90 mol% of a propylene component unit. Examples of the propylene copolymer include a propylene-ethylene copolymer, a propylene-butene copolymer, and a propylene-ethylene-butene copolymer. The propylene copolymer is preferably a random copolymer.

The polyolefin resin for forming the cover layer preferably has a melting point of 100°C or more and less than 160°C, more preferably 110°C or more and 158°C or less, and even more preferably 120°C or more and 155°C or less.

The difference between the melting point of the foamed particles (foamed core layer) of the disclosure and that of the cover layer is, in general, preferably 1°C or more and 40°C or less, more preferably 2°C or more and 35°C or less, and even more preferably 5°C or more and 30°C or less. In this case, the foamed particles are easily fused together even at comparatively low molding steam pressure, and a molded article having good compression properties is easily obtained in a consistent manner.

### <Closed Cell Content of Molded Article>

The molded article of the disclosure preferably has a closed cell content of at least 80% and more preferably at least 85%.

When the closed cell content of the molded article of the disclosure is within the above-defined range, the rigidity is increased.

A method of measuring the closed cell content of the molded article of the disclosure will be described in Examples to be referred to later.

### <Density of Molded Article>

The molded article of the disclosure preferably has a density (molded article density) of 80 to 500 kg/m³, more preferably 100 to 400 kg/m³, and even more preferably 120 to 300 kg/m³.

The molded article of the disclosure has excellent flame resistance even at a comparatively high density.

A method of measuring the density of the molded article (molded article density) will be described in Examples to be referred to later.

### <Appearance of Molded Article>

The number of voids (gaps) that may be formed at surfaces of the molded article of the disclosure is small. Specifically, the void area ratio may be less than 5%. Therefore, the molded article has excellent appearance.

The main factor is deemed to be excellent secondary foaming properties of the foamed particles of the disclosure.

A method of measuring the void area ratio at the surfaces of the molded article will be described in Examples to be referred to later.

### <Flame Resistance of Molded Article>

The molded article of the disclosure consistently exhibits excellent flame resistance. Specifically, the molded article of the disclosure can achieve V-2 of the UL94 standard and may achieve V-1 or V-0, or can sometimes achieve V-0 consistently. A method of measurement according to the UL94 standard will be described in Examples to be referred to later.

### <<Manufacturing Method>>

Manufacturing methods of the foamed particles of the disclosure and the molded article of the disclosure will be described. In the disclosure, polypropylene-based resin foamed particles can be manufactured by foaming a polypropylene-based resin composition. In other words, the manufacturing method of the foamed particles of the disclosure has a foaming step which includes foaming a polypropylene-based resin composition (sometimes simply referred to as "resin composition" in the specification). The molded article of the disclosure can be obtained by molding the foamed particles of the disclosure in a mold.

As a method of foaming resin serving as a base material in the foaming step, a suitable method according to the form of the polypropylene-based resin composition can be used from among known methods. For example, when the polypropylene-based resin composition is a resin melt, an extrusion foaming method can be adopted in the foaming step. In the extrusion foaming method, a resin melt and a foaming agent are melted and kneaded in an extruder to prepare a polypropylene-based resin melt, which is foamed while being extruded from the extruder, whereby foamed strands are prepared. Foamed particles can be obtained by cutting the foamed strands with cooling.

For example, when the polypropylene-based resin composition is in the form of resin particles, the resin particles are dispersed in a dispersion medium and impregnated with a foaming agent. Then, the resin particles containing the foaming agent are discharged with the dispersion medium at low pressure to be foamed, whereby foamed particles can be prepared. The foaming method as above is sometimes called "direct foaming method." The resin particles-foaming method is not limited to the direct foaming method. For example, when resin serving as a base material is in the form of resin particles, an impregnation foaming method can also be adopted which includes: impregnating the resin particles with a foaming agent in a gas phase, and supplying a heating medium for heating and thus foaming.

A form in which polypropylene-based resin particles are foamed in the foaming step to manufacture polypropylene-based resin foamed particles is described below by way of example. The foamed particles of the disclosure can be obtained by forming resin particles containing predetermined materials at a predetermined mass ratio, and then foaming the formed resin particles.

In the following description, a manufacturing method of resin particles is followed by manufacturing methods of the foamed particles of the disclosure and the molded article of the disclosure.

### <Manufacturing Method of Resin Particles>

First, the piperazine phosphate compound (a), the melamine phosphate compound (b), and optionally the metal hypophosphite (c), other resin components, and additives are prepared. Then, these materials are mixed with polypropylene-based resin. Thereafter, a conventionally known method is used to manufacture resin particles.

The piperazine phosphate compound (a) is blended in an amount of 3 mass% or more and 20 mass% or less, the melamine phosphate compound (b) is blended in an amount of 1 mass% or more and 15 mass% or less, and the piperazine phosphate compound (a) and the melamine phosphate compound (b) are blended in such amounts that a mass ratio of (a): (b) is 85:15 to 30:70.

The resin particles can be obtained by heating and kneading the materials in an extruder or the like to obtain a resin melt in molten state, extruding the resin melt from the extruder, and pelletizing the resin melt by a strand-cut process, a hot-cut process, an underwater process, or the like.

According to the manufacturing method of the disclosure, particles each having a core layer and a cover layer covering the core layer may be foamed to obtain foamed particles. In this case, the resin melt serves as the core layer.

Resin particles each having a core layer and a cover layer can be manufactured, for example, by a method to be described next.

First, an extruder for core layer formation, an extruder for cover layer formation, and a die for multi-layer strand formation are prepared. Each of them may be of any conventionally known type. The extruder for core layer formation and the extruder for cover layer formation are connected, on their downstream sides, to the die for multi-layer strand formation. The die for multi-layer strand formation has a coextrudable structure and also has a structure capable of laminating resin melts for forming the core layer and the cover layer in the die.

Then, a material for forming the core layer is supplied to the extruder for core layer formation, and is melted and kneaded in the extruder to obtain a resin melt. A material for forming the cover layer is supplied to the extruder for cover layer formation, and is melted and kneaded in the extruder to obtain a resin melt. Then, these two resin melts are continuously extruded from the extruders and continuously introduced into the die for multi-layer strand formation.

These resin melts are joined together in the die for multi-layer strand formation, and are continuously extruded through small holes of the die to form string-shaped multi-layer strands. The multi-layer strands are of a two-layer structure including the core layer and the cover layer.

The mass ratio between the core layer and the cover layer is preferably 99.5:0.5 to 80:20, more preferably 99:1 to 85:15, and even more preferably 98:2 to 90:10.

When the mass ratio between the core layer and the cover layer is within the above-defined range, a molded article having good compressive strength can be manufactured and foamed particles capable of being molded in a mold at comparatively low molding steam pressure can be obtained consistently.

The extruded strands are cooled with water and cut by a pelletizer to form columnar resin particles.

The cover layer may not cover the whole of the core layer as long as the object of the disclosure can be achieved.

### <Manufacturing Method of Foamed Particles of Disclosure>

The resin particles obtained as described above can be used to manufacture the foamed particles of the disclosure.

The manufacturing method of the foamed particles which includes foaming the resin particles of the disclosure to manufacture the foamed particles is not particularly limited and, for example, a conventionally known method may be used. Specifically, the foamed particles of the disclosure can be obtained by, for example, a direct foaming method as described below.

First, resin particles are charged into a sealed vessel such as an autoclave and dispersed in a dispersion medium such as water or an alcohol (preferably water).

A dispersant is preferably charged into the sealed vessel together with the resin particles because the resin particles are less likely to be fused together in the sealed vessel.

Any dispersant can be used irrespective of whether it is of an organic or inorganic type, but a fine-grained inorganic substance is preferred for ease of handling. Examples thereof include kaolin, mica, clay and other natural or synthetic clay minerals, aluminum oxide, tricalcium phosphate, magnesium pyrophosphate, zinc oxide, titanium oxide, basic magnesium carbonate, basic zinc carbonate, calcium carbonate, and iron oxide.

The dispersant is preferably used in an amount of 0.001 to 5 parts by mass with respect to 100 parts by mass of the resin particles.

A dispersion aid may be charged into the sealed vessel together with the resin particles because it serves to strengthen the dispersion force of the dispersant.

Examples of the dispersion aid include magnesium chloride, magnesium nitrate, magnesium sulfate, aluminum chloride, aluminum nitrate, and aluminum sulfate.

The dispersion aid is preferably used in an amount of 0.0001 to 1 part by mass with respect to 100 parts by mass of the resin particles.

A surfactant is preferably charged into the sealed vessel together with the resin particles.

An example of the surfactant includes an anionic surfactant such as sodium dodecylbenzenesulfonate.

Next, a foaming agent is charged into the sealed vessel to impregnate the resin particles with the foaming agent. In this process, the interior of the sealed vessel is heated and pressurized, and kept at predetermined temperature and pressure, whereby the resin particles are more likely to be impregnated with the foaming agent.

The pressure within the sealed vessel in terms of gauge pressure is preferably 0.5 to 4.0 MPa(G) and more preferably 1.0 to 4.0 MPa(G). The temperature within the sealed vessel is preferably set to 130 to 170°C.

The resin particles containing the foaming agent can be thus obtained.

Examples of the foaming agent include organic physical foaming agents such as aliphatic hydrocarbons (e.g., propane, butane, isobutane, pentane, isopentane, hexane, and heptane), cyclic aliphatic hydrocarbons (e.g., cyclobutane, and cyclohexane), and halogenated hydrocarbons (e.g., chlorofluoromethane, trifluoromethane, 1,2-difluoroethane, 1,2,2,2-tetrafluoroethane, 2,3,3,3-tetrafluoropropene, trans-1,3,3,3-tetrafluoropropene, trans-1-chloro-3,3,3-trifluoropropene, methyl chloride, ethyl chloride, and methylene chloride); and inorganic physical foaming agents such as nitrogen, oxygen, air, carbon dioxide, helium, argon, and water.

The foaming agent is preferably added in an amount of 0.1 to 30 parts by mass and more preferably 0.5 to 15 parts by mass with respect to 100 parts by mass of the resin particles.

Next, one end of the interior of the sealed vessel under the liquid surface is opened to discharge the contents of the sealed vessel into an atmosphere having a lower pressure than the interior of the vessel, thereby obtaining foamed particles. When the resin particles are ones each having a core layer and a cover layer, at least the core layer is foamed to form a foamed core layer.

A step of adjusting the crystal structure of a resin component constituting resin particles may be performed between dispersion of the resin particles in an aqueous medium and their foaming. Foamed particles having excellent in-mold moldability and also having good mechanical strength can be easily obtained by foaming after adjusting the crystal structure of the resin component.

The method of adjusting the crystal structure of the resin component is, for example, as described below. First, a holding step is performed which includes: holding resin particles in a temperature range within which the temperature is equal to or higher than the melting point - 15°C of the resin particles and is equal to or lower than the melting point + 15°C of the resin particles, for a sufficient time, preferably for about 10 to 60 minutes. The resin particles having undergone the holding step are foamed, whereby foamed particles having a crystal structure having the above-mentioned second melting peak can be obtained. The temperature of the interior of the vessel at the time of foaming is preferably equal to or higher than the melting point - 5°C of the resin particles and equal to or lower than the melting point + 10°C of the resin particles.

From the viewpoint that foamed particles having a lower bulk density (higher foaming magnification) are obtained, a two-stage foaming step which includes further foaming the foamed particles obtained may be performed. For example, first-stage foamed particles obtained by foaming resin particles using the direct foaming method or the like (first-stage foamed particles) are pressurized with air or the like to increase the pressure (internal pressure) within bubbles of the first-stage foamed particles and the first-stage foamed particles are further foamed by heating with steam or the like. Foamed particles having a lower bulk density can be thus obtained.

### <Manufacturing Method of Molded Article of Disclosure>

The method of manufacturing the molded article of the disclosure from the foamed particles of the disclosure is not particularly limited and the molded article of the disclosure can be manufactured by, for example, a conventionally known method.

A molded article can be manufactured by, for example, a conventionally known method called an in-mold heating molding method. Specifically, a molded article can be manufactured by a batch type in-mold heating molding method which includes: charging foamed particles into a molding space (cavity) of a mold capable of heating and cooling, opening and closing, and sealing after increasing its internal pressure when necessary; supplying steam to heat the foamed particles in the mold for expansion (secondary foaming) and fusion bonding of the foamed particles; then cooling; and taking the foamed particles out of the mold to obtain the molded article having the shape of the molding space of the mold.

Many molding machines already exist as molding machines for use in the batch type in-mold heating molding method. In terms of increasing productivity of molded articles, for example, in that the amount of energy used during molding can be reduced, steam supplied to a mold during in-mold molding preferably has a pressure of 0.40 MPa(G) or less, and more preferably 0.38 MPa(G) or less.

Molded particles can also be obtained by, for example, in-mold molding methods as described below.

An example is a compression molding method which includes: charging foamed particles into a molding space under atmospheric pressure or reduced pressure, the molding space being formed with a mold having a pair of two halves including a core and a cavity; compressing to reduce the volume of the molding space by 5 to 70%; and then introducing a heat medium such as steam into the molding space for thermal fusion bonding of the foamed particles (for example, JP 46-38359 B).

Another example is a pressure molding method which includes: pretreating foamed particles with one, or two or more volatile foaming agents or inorganic gases to enhance secondary foaming power of the foamed particles; then charging the foamed particles into a molding space under atmospheric pressure or reduced pressure while keeping the secondary foaming power, the molding space being formed with a mold having a pair of two halves including a core and a cavity; and then introducing a heat medium into the molding space for thermal fusion bonding of the foamed particles (for example, JP 51-22951 B).

Still another example is a compression charging method which includes: charging, into a molding space pressurized with compressed gas to the atmospheric pressure or above, foamed particles pressurized to the molding space pressure or above; and introducing a heat medium such as steam into the molding space for thermal fusion bonding of the foamed particles (for example, JP 4-46217 B).

The disclosure includes the following embodiments (1) to (13):
(1) Polypropylene-based resin foamed particles including:
   a piperazine phosphate compound (a); and a melamine phosphate compound (b), wherein:
   the piperazine phosphate compound (a) is blended in an amount of 3 mass% or more and 20 mass% or less,
   the melamine phosphate compound (b) is blended in an amount of 1 mass% or more and 15 mass% or less, and
   the piperazine phosphate compound (a) and the melamine phosphate compound (b) are blended in such amounts that a mass ratio of (a):(b) is 85:15 to 30:70.
(2) The polypropylene-based resin foamed particles according to (1) above, wherein the piperazine phosphate compound (a) and the melamine phosphate compound (b) are blended into the foamed particles in a total amount of 5 mass% or more and less than 30 mass%.
(3) The polypropylene-based resin foamed particles according to (1) or (2) above, wherein the piperazine phosphate compound (a) and the melamine phosphate compound (b) are blended into the foamed particles in such amounts that the mass ratio of (a): (b) is 75:25 to 35:65.
(4) The polypropylene-based resin foamed particles according to any one of (1) to (3) above, wherein the foamed particles include a metal hypophosphite (c), and the metal hypophosphite (c) is blended in an amount of 0.2 mass% or more and less than 3 mass%.
(5) The polypropylene-based resin foamed particles according to any one of (1) to (4) above, being substantially free from halogens.
(6) The polypropylene-based resin foamed particles according to any one of (1) to (5) above, having a closed cell content of 80% or more.
(7) The polypropylene-based resin foamed particles according to any one of (1) to (6) above, having a bulk density of 100 kg/m³ or more and 500 kg/m³ or less.
(8) A molded article of polypropylene-based resin foamed particles, the molded article being obtained by molding the polypropylene-based resin foamed particles according to any one of (1) to (7) above in a mold.
(9) A molded article of polypropylene-based resin foamed particles, the molded article including:
   a piperazine phosphate compound (a); and a melamine phosphate compound (b), wherein:
   the piperazine phosphate compound (a) is blended in an amount of 3 mass% or more and 20 mass% or less,
   the melamine phosphate compound (b) is blended in an amount of 1 mass% or more and 15 mass% or less, and
   the piperazine phosphate compound (a) and the melamine phosphate compound (b) are blended in such amounts that a mass ratio of (a): (b) is 85:15 to 30:70.
(10) The molded article of polypropylene-based resin foamed particles according to (8) or (9) above, having a closed cell content of 80% or more.
(11) The molded article of polypropylene-based resin foamed particles according to any one of (8) to (10) above, wherein flame resistance as measured according to a UL-94 vertical method of UL standard is V-0, V-1, or V-2.
(12) A method of manufacturing polypropylene-based resin foamed particles, the method including: foaming a polypropylene-based resin composition to obtain the foamed particles, wherein:
   a material for use in forming the polypropylene-based resin composition includes:
   a piperazine phosphate compound (a); and a melamine phosphate compound (b),
   the piperazine phosphate compound (a) is blended in an amount of 3 mass% or more and 20 mass% or less,
   the melamine phosphate compound (b) is blended in an amount of 1 mass% or more and 15 mass% or less, and
   the piperazine phosphate compound (a) and the melamine phosphate compound (b) are blended in such amounts that a mass ratio of (a): (b) is 85:15 to 30:70.
(13) A method of manufacturing a molded article of polypropylene-based resin foamed particles, the method including a step of molding, in a mold, polypropylene-based resin foamed particles obtained by the method of manufacturing polypropylene-based resin foamed particles according to (12) above, thereby obtaining the molded article of polypropylene-based resin foamed particles.

### EXAMPLES

The present disclosure is described below more specifically by way of examples. However, the present disclosure should not be construed as being limited to the examples.

Resin particles including, as materials, a piperazine phosphate compound (a), a melamine phosphate compound (b), a metal hypophosphite (c), a cyclic phosphonate (d), and a hindered amine light stabilizer (e) at a blending ratio (mass%) shown in Table 1, and further including a cell nucleating agent, with the balance being a polypropylene-based resin, were made and foamed to obtain foamed particles, which were then used to obtain a molded article.

A detailed description is given below.

### <Materials>

The following materials were prepared.
* Polypropylene-based resin: Ethylene-propylene random copolymer (MFR: 8 g/10 min);
* Piperazine phosphate compound (a): Piperazine pyrophosphate;
* Melamine phosphate compound (b): Melamine pyrophosphate;
* Metal hypophosphite (c): Aluminum hypophosphite;
* Cyclic phosphonate (d): Pentaerythritol diphosphonate, Aflammit (registered trademark) PCO 900;
* Hindered amine light stabilizer (e): Flamestab NOR116 FF manufactured by BASF Japan Ltd.; and
* Cell nucleating agent: Zinc borate.

### <Fabrication of Resin Particles>

An extruder having an internal diameter of 26 mm and equipped with a strand forming die at its exit side was used.

First, the respective materials were supplied to the extruder so as to have predetermined contents and kneaded with heating in the extruder to prepare a resin melt in molten state.

The cell nucleating agent was supplied to the extruder in an amount of 0.1 parts by mass with respect to 100 parts by mass of the polypropylene-based resin.

Next, the resin melt in molten state was guided to the strand forming die and extruded in a strand shape from nozzles at the tip of the die. A strand-shaped extrudate was taken out, cooled with water, and cut into a suitable length using a pelletizer to obtain resin particles as a resin composition.

The average mass of each resin particle was 15 mg.

### <Fabrication of Foamed Particles>

The resin particles (100 parts by mass) obtained by the above process, an aqueous medium (water; 700 parts by mass), sodium dodecylbenzenesulfonate (surfactant; 0.04 parts by mass; as an effective component), and kaolin (dispersant; 0.6 parts by mass) were charged into a 5L autoclave; carbon dioxide (foaming agent) was supplied with stirring to increase the temperature and pressure within the autoclave to a foaming temperature and an equilibrium pressure shown in the table; and this state was held for 15 minutes. The bulk density of foamed particles can be adjusted by controlling the amount of carbon dioxide (foaming agent) to be supplied and the temperature during foaming.

Next, one end of the autoclave was opened and the content of the autoclave was discharged under atmospheric pressure to foam and expand the resin particles, thereby obtaining foamed particles (namely, expanded beads).

While the content of the autoclave was discharged from the autoclave, carbon dioxide was supplied to the autoclave so that the autoclave was kept at the internal pressure of the autoclave just before discharging.

Next, the resulting foamed particles were stored at 23°C for 24 hours in an atmosphere of 50% relative humidity.

The bulk density, the heat of fusion at the high temperature peak, and the closed cell content of the resulting foamed particles were measured by the following methods.

The measurement results are shown in Table 1.

### <Bulk Density of Foamed Particles>

The foamed particles were allowed to stand for 24 hours or more in an environment of a relative humidity of 50%, a temperature of 23°C, and an atmospheric pressure of 1 atm to perform conditioning of the foamed particles. The conditioned foamed particles with a bulk volume of 500 cm³ were charged into a graduated cylinder. Further, the bottom surface of the graduated cylinder was tapped to stabilize the positions in a height direction of the whole group of the foamed particles (group of foamed particles) charged into the graduated cylinder. The scale of the graduated cylinder was read in this state to measure the exact bulk volume of the group of foamed particles. The bulk density (unit: kg/m³) of the foamed particles was calculated by unit conversion of a value obtained by dividing the mass of the group of foamed particles in the graduated cylinder by the bulk volume.

The results are shown in Table 1.

### [High Temperature Peak>

The amount of heat of the foamed particles at the high temperature peak was calculated as described below from a DSC curve of the foamed particles measured according to JIS K7122:2012.

First, a foamed particle was used as a sample and subjected to differential scanning calorimetry involving heating from 23°C to 230°C at a heating rate of 10°C/min, thereby obtaining a DSC curve. The flow rate of nitrogen gas in a measurement environment was set to 30 mL/min. When the foamed particle has a high temperature peak, a first melting peak (intrinsic peak) and a second melting peak located on a higher temperature side than the intrinsic peak appear on the DSC curve.

On the DSC curve, a line L1 connecting Point α corresponding to 80°C to Point β corresponding to the melting end temperature T of the foamed particle is drawn. The melting end temperature T is an end point on the high temperature side at the high temperature peak.

A line L2 which passes through an extreme point γ existing between the intrinsic peak and the high temperature peak, and is parallel to the vertical axis of a graph showing the DSC curve is drawn. This line L2 separates the intrinsic peak and the high temperature peak from each other. The heat of fusion at the high temperature peak can be calculated based on the area of a portion surrounded by a portion forming the high temperature peak on the DSC curve, and the lines L1 and L2.

This measurement was performed three times on different measurement samples and an arithmetic mean value obtained by averaging the respective measured values was taken as the amount of heat at the high temperature peak.

The results are shown in Table 1.

### [Closed Cell Content of Foamed Particles]

The closed cell content of the foamed particles was measured using an air comparison pycnometer according to Procedure C of ASTM-D2856-70. Specifically, the closed cell content was measured as follows:
First, the foamed particles were allowed to stand for 24 hours or more in an environment of a relative humidity of 50%, a temperature of 23°C, and an atmospheric pressure of 1 atm to perform conditioning of the foamed particles. A measurement sample was collected so that the gauge line took a value of about 20 cm³ when foamed particles were naturally deposited in a graduated cylinder from the conditioned group of foamed particles. The measurement sample was submerged in the graduated cylinder containing ethanol at a temperature of 23°C to measure the apparent volume of the measurement sample based on the amount of the increased liquid level.

The measurement sample of which the apparent volume had been measured was sufficiently dried and a true volume value of the measurement sample as measured by AccuPyc II 1340 manufactured by Shimadzu Corporation was measured according to Procedure C described in ASTM-D2856-70.

Then, these volume values were used to calculate the closed cell content (unit: %) of the measurement sample based on the following formula (X): $Closed cell content = \left(Vx-W/ρ\right) \times 100 / \left(Va-W/ρ\right)$ (X).

In the above formula (X), Vx (unit: cm³) is the true volume of the foamed particles (that is, the sum of the volume of resin constituting the foamed particles and the total bubble volume of closed cell portions in the foamed particles); Va (unit: cm³) is the apparent volume of the foamed particles (that is, volume measured from the rise in liquid level when the foamed particles were submerged in the ethanol-containing graduated cylinder); W (unit: g) is the mass of the measurement sample; and ρ (unit: g/cm³) is the density of polypropylene-based resin constituting the foamed particles.

The above operation was performed five times using different measurement samples, and an arithmetic mean value of the closed cell content obtained from the five measurements was taken as the closed cell content of the foamed particles.

### <Fabrication of Molded Article>

Next, the resulting foamed particles were used to fabricate a molded article. The molded article was fabricated as described below.

First, the foamed particles were put in a pressure-resistant container and the interior of the pressure-resistant container was pressurized with air to impregnate the foamed particles with air to apply an internal pressure of 0.10 MPa(G) to the foamed particles.

Next, a molding machine capable of molding foamed particles with steam in a mold was prepared. The molding machine has a mold made up of a pair of two halves (a cavity and a core) and capable of forming a rectangular parallelepiped-shaped molding space with dimensions of 200 mm in length, 250 mm in width, and 50 mm in thickness. The foamed particles to which the internal pressure had been applied were charged into the molding space of the mold, and then steam was fed into the chamber of the mold to increase the internal pressure of the chamber to cause the pressure and the temperature to act on the molding space, whereby the foamed particles within the mold were pressurized and heated. This causes softening, secondary foaming, and fusion bonding of the foamed particles in the mold.

Thereafter, the mold was cooled with water to fuse the foamed particles within the mold together, thereby obtaining a molded article. Then, the mold was opened to take out the molded article from inside the mold, and the molded article was allowed to stand for 24 hours in a storage held at 80°C.

The pressure of steam fed into the chamber (that is, steam pressure within the chamber) was used as a parameter. The pressure was changed in increments of 0.02 MPa(G) to perform molding, thereby obtaining some molded articles. The minimum steam pressure required for passing, in each molded article, all evaluation items including the state of fusion of the foamed particles and their recoverability was determined. The results are shown in Table 1 as "Minimum molding pressure." Comparative Examples 3 to 5 did not have the molding pressure at which the fusing properties and the recoverability were both rated as Pass, and the highest pressure condition within the range in which the recoverability was rated as Pass was therefore used as the molding condition (minimum molding pressure).

Evaluation was made as described below as to whether the state of fusion was rated as Pass or Fail.

First, the fusion ratio of a molded article was measured as described below.

A slit of about 5 mm in length was made with a box cutter in the thickness direction of the molded article at a central position thereof (central position of a test piece in its longitudinal direction), and the molded article was bent so that the bending stress is applied to the central position of the molded article, thereby being broken. The number (C1) of foamed particles which were present at fracture surfaces (fracture surfaces of the molded article) appearing at that time and the number (C2) of broken foamed particles were measured. The ratio (C2/C1 × 100) of the broken foamed particles to the foamed particles was calculated and a calculated value was taken as the fusion ratio (%).

Test pieces were rated as Pass when the fusion ratio was 80% or more, and rated as Failed when it was less than 80%. The column of "Fusion-bonding properties" in Table 1 was given "A" when they were rated as Pass, and "B" when they were not rated as Pass.

Evaluation was made as described below as to whether the recoverability was rated as Pass or Fail.

A surface of a molded article surrounded by sides with a length of 250 mm and sides with a width of 200 mm is seen from above in its thickness direction. The thicknesses of the molded article at four positions located 10 mm inside from each corner of the surface toward the center of the surface, and the thickness of the molded article at the central position of the surface were respectively measured. Next, the ratio (unit: %) of the thickness of the thinnest portion to that of the thickest portion in the measured portions was calculated. Test pieces were rated as Pass when the thus obtained thickness ratio was 90% or more, and rated as Failed when it was less than 90%. The column of "Recoverability" in Table 1 was given "A" when they were rated as Pass, and "B" when they were rated as Fail.

Next, the molded articles obtained by molding using the steam pressure shown as the minimum molding pressure were subjected to measurement of the appearance (secondary foaming properties), the density, the compressive stress at 50%, the closed cell content, and the flame resistance of the molded articles by methods shown below.

The measurement results are shown in Table 1.

### [Appearance (Secondary Foaming Properties)]

A one-shot 3D measuring macroscope (type: VR-3200 manufactured by Keyence Corporation) was used. Surface positions on a surface (specifically a surface surrounded by sides with a length of 250 mm and sides with a width of 200 mm) of a molded article were determined by a least squares method and used as a reference surface. The areas at the reference surface of voids (gaps) reaching a depth of 0.1 mm or more from the reference surface were measured, and the ratio of their total area to the area of the whole surface of the molded article (void area ratio) was calculated.

Then, the ratio was used to evaluate the appearance of the molded article as follows:
* The void area ratio of less than 5% is rated as 5 (the appearance of the molded article is the most excellent).
* The void area ratio of 5% or more and less than 10% is rated as 4 (the appearance of the molded article is excellent).
* The void area ratio of 10% or more and less than 18% is rated as 3.
* The void area ratio of 18% or more and less than 25% is rated as 2 (the appearance of the molded article is poor).
* The void area ratio of 25% or more is rated as 1 (the appearance of the molded article is the poorest).

The results are shown in Table 1. The appearance (secondary foaming properties) of a molded article is one of indicators of the moldability of foamed particles. In the specification, foamed particles capable of being molded in a mold to provide a molded article in which the fusing properties are rated as A, the recoverability as A, and the appearance (secondary foaming properties) as 5 are deemed to have excellent moldability. A molded article of which the appearance (secondary foaming properties) had been rated as 1 was not evaluated for the density, compressive stress at 50%, closed cell content, and flame resistance.

### [Density]

The mass of a molded article was divided by the volume determined from external dimensions of the molded article and the density of the molded article was calculated by unit conversion. The results are shown in Table 1.

### [Compressive Stress at 50%]

A rectangular parallelepiped-shaped test piece with dimensions of 50 mm in length, 50 mm in width, and 25 mm in thickness having no skin surfaces was cut out from a central portion of a molded article. Then, a compression test of the test piece was performed at a compression rate of 10 mm/min according to the method specified in JIS K7220:2006. A stress-strain curve was obtained based on the compression test. The compression test was performed in an atmosphere of 23°C. The compressive stress of the test piece at 50% strain was calculated based on the resulting stress-strain curve and the resulting value was taken as the compressive stress at 50% of the molded article. The result is shown in Table 1. The compressive stress at 50% is an indicator of the rigidity of the molded article. In other words, a larger value indicates a molded article having a higher rigidity.

### [Closed Cell Content of Molded Article]

The closed cell content of a molded article is measured according to Procedure C of ASTM 2865-70. Specifically, a test piece with dimensions of 25 mm in length, 25 mm in width, and 30 mm in height was first cut out from a central portion of a molded article, and its geometric volume Va (unit: cm³), that is, the product of the vertical dimension (unit: cm), the horizontal dimension (unit: cm), and the height dimension (unit: cm) is calculated. Next, the true volume value Vx of the test piece is measured according to Procedure C described in ASTM-D2856-70 using an air comparison pycnometer (specifically, for example, Beckman Model 1000 Air Comparison Pycnometer manufactured by Tokyo Science Co., Ltd.). The true volume value Vx obtained by the air comparison pycnometer is the sum (unit: cm³) of the volume of resin constituting a measurement sample and the total volume of bubbles of closed cells in the measurement sample.

The closed cell content (unit: %) of the test piece is expressed by the following formula using the mass W (unit: g) of the test piece, the density ρ (unit: g/cm³) of resin constituting foamed particles, and the geometric volume Va and the true volume Vx of the test piece obtained by the above-mentioned method. $Closed cell content = \left(Vx-W/ρ\right) \times 100 / \left(Va-W/ρ\right)$

The above operation was performed on five test pieces to calculate the closed cell content of each test piece. Then, the arithmetic mean value of the closed cell content in the five test pieces is taken as the closed cell content of the molded article.

### [Flame Resistance]

The fire resistance was evaluated according to the flammability test "V-0/V-1/V-2: 50W (20 mm) Vertical burning test" of the UL94 standard. This evaluation method is shown on https://yasuda-seiki.co.jp/flammability/.

The tester used includes a test chamber, a burner, a manometer, a flowmeter, a ring stand, and a burner flame calibration device.

The test chamber used has an internal volume of at least 0.5 m³, is capable of observing the process of the test, and does not prevent such aeration as to enable normal thermal circulation of air passing over a test piece during burning. It should have darkly colored internal surfaces and an illuminance of less than 20 lux. Further, it is desirable to attach a ventilator for removing combustion products.

The burner used has a tube with a length of 100 +/- 10 mm and an internal diameter of 9.5 +/- 0.3 mm. It should conform to ASTM D5025.

An instrument capable of measuring water up to 200 mm in increments of 5 mm is used as the manometer (U-tube manometer)/pressure gauge.

The flowmeter used is a rotameter (float-type flowmeter) calibrated according to JIS D3195 "Rotameter Calibration Method," which has a correlation curve adapted for gas, or a mass flowmeter with an accuracy of at least +/- 2%.

The ring stand used includes a clamp or a device equivalent thereto for placing a test piece or wire mesh horizontally or vertically.

A thermocouple for calibration or a calibration device is used as the burner flame calibration device. The thermocouple is required to be a stainless steel sheathed K-type thermocouple according to ASTM E608.

The test procedure will be described.

A test piece (with a length of 125 +/- 5 mm, a width of 13.0 +/- 0.5 mm, and a thickness of 13.0 mm) is prepared, one end thereof in its longitudinal direction (portion 6 mm distant from the end) is fixed with a jig, and the test piece is held so that the one end is on the upper side and the other end is on the lower side, that is, its longitudinal direction is oriented vertically.

Next, the burner is moved closer to the main surface of the test piece at its other end (lower end) at a rate of 300 mm/s, and the upper part of flame of the burner is brought into contact with the lower end of the test piece for 10 +/- 0.5 s. The part (lower part) of the burner flame other than the upper part is adjusted to have a vertical length of 10 +/- 1 mm.

After the upper part of the burner flame is brought into contact with the lower end of the test piece for 10 +/- 0.5 s, the burner is moved 150 mm or more away at a rate of 300 mm/s while simultaneously measuring the after-flame time.

Then, after the end of burning, the burner is immediately moved to the lower end of the test piece so that the upper part of the burner flame is brought into contact with the lower end of the test piece for 10 +/- 0.5 s as above, and the after-flame time and after-glow time are measured.

The after-flame time refers to the length of time of flaming of the test piece after the removal of the burner flame until the end of flaming. The after-glow time refers to the length of time of glowing of the test piece (in a red-hot state) after the removal of the burner flame until the end of glowing.

The flammability test as described above was performed and the flammability was classified from the test results into grades of V-0/V-1/V-2 as shown in Table 2. Five test pieces prepared under the same conditions were evaluated, and the evaluation result of a test piece having the lowest rating was used for rating (grade) under those conditions.

**[Table 1]**

| Item | | | Example | | | | | | | | Comparative Example | | | | | | |
|---|---|---|---|---|---|---|---|---|---|---|---|---|---|---|---|---|---|
| | | | EX 1 | EX 2 | EX 3 | EX 4 | EX 5 | EX 6 | EX 7 | EX 8 | CE 1 | CE 2 | CE 3 | CE 4 | CE 5 | CE 6 | CE 7 |
| Resin particle | Piperazine phosphate compound (a) | mass% | 11 | 10 | 14 | 11 | 11 | 15 | 11 | 11 | 0 | 19 | 22 | 11 | 22 | 0 | 4 |
| | Melamine phosphate compound (b) | mass% | 8 | 7 | 10 | 8 | 8 | 4 | 8 | 8 | 19 | 0 | 8 | 16 | 16 | 0 | 15 |
| | Metal hypophosphite (c) | mass% | 1.5 | 1.5 | 1.5 | 0.8 | 0 | 1.5 | 1.5 | 1.5 | 1.5 | 1.5 | 1.5 | 1.5 | 1.5 | 0 | 1.5 |
| | Cyclic phosphonate (d) | mass% | 0 | 0 | 0 | 0 | 0 | 0 | 0 | 0 | 0 | 0 | 0 | 0 | 0 | 18.75 | 0 |
| | Hindered amine light stabilizer (e) | mass% | 0 | 0 | 0 | 0 | 0 | 0 | 0 | 0 | 0 | 0 | 0 | 0 | 0 | 3 | 0 |
| | (a)/(c) | - | 7.3 | 6.4 | 9.2 | 13.8 | - | 10.0 | 7.3 | 7.3 | 0 | 12.7 | 14.7 | 7.3 | 14.7 | - | 2.7 |
| | (a)+(b) | mass% | 19.0 | 16.6 | 23.8 | 19.0 | 19.0 | 19.0 | 19.0 | 19.0 | 19.0 | 19.0 | 30.0 | 27.0 | 38.0 | 0 | 19.0 |
| | (a):(b) | - | 58:42 | 58:42 | 58:42 | 58:42 | 58:42 | 79:21 | 58:42 | 58:42 | 0:100 | 100:0 | 73:27 | 41:59 | 58:42 | 0 | 21:79 |
| | (a)+(b)+(c) | mass% | 20.5 | 18.1 | 25.3 | 19.8 | 19.0 | 20.5 | 20.5 | 20.5 | 20.5 | 20.5 | 31.5 | 28.5 | 39.5 | 0 | 20.5 |
| Foaming condition | Foaming temperature | °C | 150 | 150 | 150 | 150 | 150 | 150 | 150 | 150 | 150 | 150 | 150 | 150 | 150 | 150 | 150 |
| | Equilibrium pressure | MPa(G) | 1.8 | 1.8 | 1.8 | 1.8 | 1.8 | 1.8 | 1.4 | 2.0 | 1.8 | 1.8 | 1.8 | 1.8 | 1.8 | 1.8 | 1.8 |
| Foamed particle | Bulk density | kg/m³ | 165 | 165 | 165 | 165 | 165 | 165 | 270 | 110 | 165 | 165 | 165 | 165 | 165 | 165 | 165 |
| | High temperature peak | J/g | 13 | 13 | 13 | 13 | 13 | 13 | 15 | 13 | 13 | 13 | 13 | 13 | 13 | 13 | 13 |
| | Closed cell content | % | 90 | 91 | 89 | 90 | 91 | 89 | 90 | 89 | 90 | 91 | 83 | 84 | 82 | 63 | 89 |
| Molding step (Internal pressure molding) | Minimum molding pressure | MPa(G) | 0.40 | 0.40 | 0.40 | 0.40 | 0.40 | 0.40 | 0.40 | 0.40 | 0.40 | 0.40 | 0.40 | 0.40 | 0.40 | 0.42 | 0.40 |
| | fusion-bonding properties | - | A | A | A | A | A | A | A | A | A | A | B | B | B | A | A |
| | Recoverability | - | A | A | A | A | A | A | A | A | A | A | A | A | A | A | A |
| Molded article | Appearance (Secondary foaming properties) | - | 5 | 5 | 5 | 5 | 5 | 5 | 5 | 5 | 5 | 5 | 1 | 1 | 1 | 3 | 5 |
| | Density | kg/m³ | 180 | 180 | 180 | 180 | 180 | 180 | 300 | 120 | 180 | 180 | - | - | - | 180 | 180 |
| | Compressive stress at 50% | kPa | 200 | 200 | 200 | 200 | 200 | 200 | 500 | 100 | 200 | 200 | - | - | - | 180 | 200 |
| | Closed cell content | % | 88 | 85 | 86 | 88 | 87 | 87 | 88 | 87 | 88 | 88 | - | - | - | 60 | 85 |
| | Flame resistance (UL94) | - | V-0 | V-0 | V-0 | V-0 | V-2 | V-2 | V-0 | V-0 | V-2 not achieved | V-2 not achieved | - | - | - | V-0 | V-2 not achieved |

| | | | | | | | | | | | | | | | | | |
|---|---|---|---|---|---|---|---|---|---|---|---|---|---|---|---|---|---|
| EX: Example, CE: Comparative Example | | | | | | | | | | | | | | | | | |

**[Table 2]**

| Determination criteria | Grade | | |
|---|---|---|---|
| | V-0 | V-1 | V-2 |
| First or second after-flame time of each test piece | 10 s or less | 30 s or less | 30 s or less |
| Total of after-flame time and after-glow time after second flame contact | 30 s or less | 60 s or less | 60 s or less |
| Total after-flame time of five test pieces | 50 s or less | 250 s or less | 250 s or less |
| Presence of ignition of cotton due to dropped burning material | No | No | Yes |
| Presence of burning or glowing up to clamp (fixing device) | No | No | No |

As shown in Table 1, comparison with Example 1 revealed that Comparative Example 1 in which no piperazine phosphate compound (a) was contained, and Comparative Example 2 in which no melamine phosphate compound (b) was contained did not achieve the flame resistance of V-2.

Comparison with Example 1 revealed that in Comparative Example 3 in which a piperazine phosphate compound (a) was blended in too large an amount, and in Comparative Example 4 in which a melamine phosphate compound (b) was blended in too large an amount, foamed particles excessively shrank due to heating during molding and a good molded article having excellent appearance could not be obtained.

Comparison with Example 3 revealed that in Comparative Example 5 in which a piperazine phosphate compound (a) and a melamine phosphate compound (b) were both blended in too large amounts, foamed particles excessively shrank due to heating during molding and a good molded article having excellent appearance could not be obtained.

Comparison with Example 1 revealed that in Comparative Example 6 in which a cyclic phosphonate (d) (Aflammit (registered trademark)) was included instead of a piperazine phosphate compound (a) and a melamine phosphate compound (b), the closed cell content of foamed particles was reduced to cause lower secondary foaming properties of the foamed particles, thus leading to deterioration of the appearance of the molded article obtained. The molded article also had a lower closed cell content and was also inferior in rigidity as compared to Example 1.

Further, comparison with Examples 1 and 6 revealed that Comparative Example 7 in which the mass ratio of the amounts of blended piperazine phosphate compound (a) and melamine phosphate compound (b) as represented by (a): (b) was not within the range of 85:15 to 30:70 was inferior in flame resistance.

## Claims

1. Polypropylene-based resin foamed particles comprising:
a piperazine phosphate compound (a); and a melamine phosphate compound (b), wherein:
the piperazine phosphate compound (a) is blended in an amount of 3 mass% or more and 20 mass% or less,
the melamine phosphate compound (b) is blended in an amount of 1 mass% or more and 15 mass% or less, and
a mass ratio of a blended amount of the piperazine phosphate compound (a) to a blended amount of the melamine phosphate compound (b) (a): (b) is 85:15 to 30:70.

2. The polypropylene-based resin foamed particles according to claim 1, wherein a total blended amount of the piperazine phosphate compound (a) and the melamine phosphate compound (b) in the foamed particles is 5 mass% or more and less than 30 mass%.

3. The polypropylene-based resin foamed particles according to claim 1 or 2, wherein the mass ratio of the blended amount of the piperazine phosphate compound (a)to the blended amount of the melamine phosphate compound (b) in the foamed particle (a):(b) is 75:25 to 35:65.

4. The polypropylene-based resin foamed particles according to any one of claims 1 to 3, wherein the foamed particles further comprise a metal hypophosphite (c), and the metal hypophosphite (c) is blended in an amount of 0.2 mass% or more and less than 3 mass%.

5. The polypropylene-based resin foamed particles according to any one of claims 1 to 4, being substantially free from a halogen element.

6. The polypropylene-based resin foamed particles according to any one of claims 1 to 5, having a closed cell content of 80% or more.

7. The polypropylene-based resin foamed particles according to any one of claims 1 to 6, having a bulk density of 100 kg/m³ or more and 500 kg/m³ or less.

8. A molded article of polypropylene-based resin foamed particles, the molded article being obtained by in-mold molding the polypropylene-based resin foamed particles according to any one of claims 1 to 7 in a mold.

9. A molded article of polypropylene-based resin foamed particles, the molded article comprising:
a piperazine phosphate compound (a); and a melamine phosphate compound (b), wherein:
the piperazine phosphate compound (a) is blended in an amount of 3 mass% or more and 20 mass% or less,
the melamine phosphate compound (b) is blended in an amount of 1 mass% or more and 15 mass% or less, and
and a mass ratio of a blended amount of the piperazine phosphate compound (a) to a blended amount of the melamine phosphate compound (b) (a): (b) is 85:15 to 30:70.

10. The molded article of polypropylene-based resin foamed particles according to claim 8 or 9, having a closed cell content of 80% or more.

11. The molded article of polypropylene-based resin foamed particles according to any one of claims 8 to 10, wherein a flame resistance as measured according to a UL-94 vertical method of UL standard is V-0, V-1, or V-2.

12. A method of manufacturing polypropylene-based resin foamed particles, the method comprising: foaming a polypropylene-based resin composition to obtain the foamed particles, wherein:
a material for use in forming the polypropylene-based resin composition comprises:
a piperazine phosphate compound (a); and a melamine phosphate compound (b),
the piperazine phosphate compound (a) is blended in an amount of 3 mass% or more and 20 mass% or less,
the melamine phosphate compound (b) is blended in an amount of 1 mass% or more and 15 mass% or less, and
a mass ratio of a blended amount of the piperazine phosphate compound (a) to a blended amount of the melamine phosphate compound (b) (a): (b) is 85:15 to 30:70.
